# EUROPEAN PATENT SPECIFICATION

(11) **EP 3 507 819 B1**
(45) Date of publication and mention of the grant of the patent: **24.06.2020**
(21) Application number: 17761473.2
(22) Date of filing: 30.08.2017
(51) Int. Cl.: H01H 33/42, H01H 33/28, H01H 3/26, H01H 3/28, H01H 33/36, H01H 33/38

(54) **A HIGH VOLTAGE CIRCUIT BREAKER**
HOCHSPANNUNGSSCHUTZSCHALTER
DISJONCTEUR HAUTE TENSION

(30) Priority: 01.09.2016 EP 16186755
(43) Date of publication of application: 10.07.2019
(73) Proprietor: ABB Schweiz AG, 5400 Baden (CH)
(72) Inventor: BACKMAN, Magnus, 722 46 Västerås (SE); BORMANN, Dierk, 723 53 Västerås (SE); SALINAS, Ener, 722 10 Västerås (SE); THOMAS, Richard, 784 74 Borlänge (SE)
(74) Representative: Kransell & Wennborg KB
(86) International application number: PCT/EP2017/071723
(87) International publication number: WO 2018/041874

(56) References cited:
- EP-A1- 1 164 610
- EP-A1- 2 701 280
- EP-A1- 2 993 775
- DE-A1- 3 102 244
- DE-A1-102014 219 088
- US-A- 4 032 988
- US-A1- 2012 299 388

## Description

### Field of the invention

The present invention relates to high voltage circuit breakers comprising at least two interrupters. The invention is also related to the use of the high voltage circuit breaker according to the invention for interrupting a multi-phase current.

### Background of the invention

A circuit breaker is an automatically operated electrical switch designed to protect an electrical circuit from damage caused by overcurrent, overload, or short circuit. Its basic function is to interrupt current flow after a protective sensor has detected a fault.

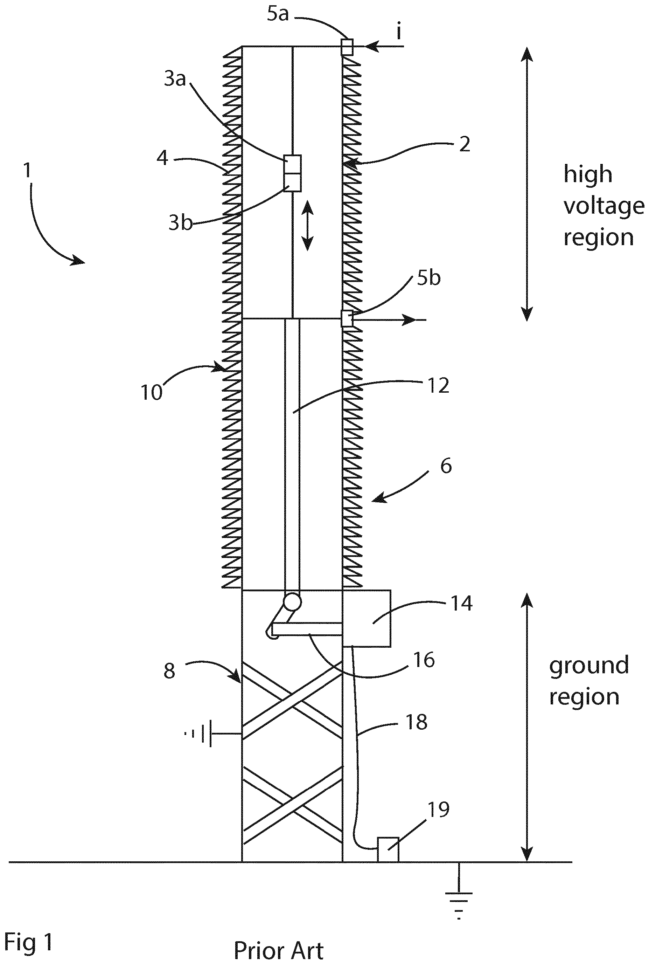

Figure 1 shows an example of a prior art circuit breaker 1. A prior art circuit breaker comprises at least one interrupter unit 2. The interrupter unit 2 includes at least one fixed contact 3a and a movable contact 3b arranged movable in relation to the fixed contact between an opened and closed state. The interrupter unit 2 further comprises an insulating housing 4 enclosing the fixed and movable contacts 3a-b, and having an electrical input terminal 5a in one end, and an electrical output terminal 5b in the opposite end. The interrupter unit 2 is arranged in an upper high voltage region, i.e. at an electrical potential above 1 kV, and at a distance from a lower ground region. The circuit breaker 1 further comprises a support frame 6 for supporting the interrupter unit 2 and to keep the interrupter unit at a safe distance from ground. The support frame 6 includes a base part 8, or support structure, arranged in the ground region, i.e. a region at ground potential, and an insulating part 10, or support insulator, extending between the base part 8 and the interrupter unit 2. The insulating part is filled with an insulating medium, for example, SF6. The insulating part 10 provides electrical insulation between the base part 8 at ground potential and the interrupter unit 2 at high electrical potential.

The circuit breaker 1 further comprises at least one pull rod 12 attached to the movable contact 3b and linearly movable in relation to the support frame 6, and an operating mechanism 14 for moving the pull rod in order to open and close the contacts 3a-b. The operating mechanism 14 moves the pull rod 12 and by that moves the movable contact 3b of the interrupter unit. The operating mechanism 14 comprises a piston 16, a spring (not shown) for actuating the piston 16, and a motor (not shown) for loading the spring. The operating mechanism 14 is located at the base part 8 of the support frame 6 and below the insulating part 10. The operating mechanism 14 is arranged on ground potential. The motor is supplied with power through a cable 18 from a power supply source 19 located in the ground region. A disadvantage with this prior art circuit breaker is that it requires an excess of energy to operate the movable contact of the interrupter unit through a pull rod from the ground region. Another disadvantage is that the operation of the prior art device only transfers mechanical energy in form of torque, which is a restrictive action.

To be able to interrupt currents in more than one phase, the circuit breaker must have one interrupter for each phase. Thus, a three phase circuit breaker includes three interrupter units. Further, in order to be able to interrupt the current in a step-by-step manner, each of the interrupter units must be operated individually. A substation often includes a large number of circuit breakers interrupting different currents, and accordingly the substation needs a great number of independently operated interrupter units.

EP1164610 discloses a high voltage circuit breaker comprising an interrupter unit located in a high voltage region and including a movable contact arranged movable between an opened and closed state, an operating mechanism located in the high voltage region and comprising an actuator for moving the movable contact of the interrupter unit, a power supply source located in a ground region, and a power transfer arrangement including an optical fiber through which the charging current to the operating mechanism is introduced in the form of light signals, which are then converted into electrical current on the high electrical potential. The optical fiber is guided through the interior of a support frame. Each pole of the circuit breaker has one interrupter unit and one actuator located at the high voltage level. The interrupter unit and the actuator of each pole are supported by two support frames. Each of the actuators is supplied with power by a power transfer device including an optical fiber guided through the interior of one of the support frames. Consequently, a three phase circuit breaker needs six support frames. US4032988 discloses a high voltage circuit breaker according to the preamble of claim 1.

### Object and summary of the invention

One object of the present invention is to reduce costs for the support structure for a circuit breaker including at least two independently controlled interrupters. Another object of the present invention is to reduce the footprint of the circuit breaker.

This object is achieved by a high voltage circuit breaker as defined in claim 1.

The circuit breaker comprises a high voltage circuit breaker including first and second interrupter units located in a high voltage region, each interrupter unit including a movable contact arranged movable between an opened and closed state, and an operating mechanism located in the high voltage region and arranged to move the movable contacts between the opened and closed states. The operating mechanism comprises a first actuator arranged to operate the movable contact of the first interrupter unit, and a second actuator arranged to operate the movable contact of the second interrupter unit, and the first and second actuators are configured to move the movable contacts of the first and second interrupter units independent of each other. The circuit breaker further comprises a power supply source located in a ground region, and a power transfer arrangement for transferring power from the power supply source to the operating mechanism comprising a wireless power transfer device adapted for wireless power transmission between the ground region and the high voltage region. The first and second actuators are integrated in one unit disposed between the first and second interrupter units, and said power transfer device is configured to supply the first as well as the second actuators with power.

The interrupter unit and the operating mechanism are both located in the high voltage region. The invention is based on the realization that due to the fact that the operating mechanism is moved to the high voltage region and the pull rod is omitted, it is possible to integrate the first and second actuators into one unit disposed between the first and second interrupter units, and by that reduce the foundation needed to support the interrupters and the operating mechanism. Thus, it is possible to reduce the number of support frames or even omit the support frames, and accordingly the cost for the support structure can be reduced. In a substation, it is possible to half the number of support frames since two interrupter units can share one support frame. A further advantage with the invention is that a more compact circuit breaker can be achieved. Further, the footprint of the circuit breaker is reduced. Another advantage with the invention is that one power transfer device can be shared between two interrupter units adapted to interrupt currents of two different phases, which will further reduce the costs of the circuit breaker.

Since the first and the second actuators are configured to move the movable contacts of the first and second interrupter units independently of each other, the opening and closing of the interrupter units can be controlled independently of each other. Consequently, the currents through the first and second interrupters can be interrupted at different points in time. Thus it is possible for the first and the second interrupters to interrupt currents with different phase shifts. This enables the two interrupters to interrupt currents of different phases or in other ways not related to each other. Therefore, two independently operated interrupters may share the same control mechanism and also the same power transfer device.

The interrupter unit and the operating mechanism are both located in the high voltage region. The operating mechanism is located in the close vicinity of the interrupter units. The power supply source is located in the ground region, i.e. at ground potential. In order to supply the operating mechanism with power, the circuit breaker is provided with a power transfer arrangement comprising a power transfer device adapted for wireless power transmission. Bringing power to the interrupter unit by wireless power transfer makes it possible to locate the operating mechanism close to the interrupters in the high voltage region, and consequently significantly reduce the length of the pull rod, and even eliminate the pull rod.

With high voltage is meant a voltage above 1 kV. Thus, the voltage in the high voltage region is largerthan 1 kV. The high voltage region is located above the ground region. Due to the high voltage, the high voltage region has to be located at a certain distance from the ground potential in order to avoid flashover. The distance is needed to increase the insulation, e.g. air or SF6, between two points in an applied electric field. By doing it strategically, the generation of a disruptive discharge of electricity through the insulating medium can be avoided. The shorter insulation distance the higher risk to produce an arc or flashover.

With located in the high voltage region is meant that the component is located at a safe distance from the ground region at ground potential. The definition of the safe distance depends on the size of potential in the high voltage region. Higher voltage needs larger distance between the components at ground potential and the components at the high electrical potential. The interrupter unit and the operating mechanism are located in the high voltage region, and the base part of the support frame and the power supply source are located in the ground region.

Due to the large difference in electrical potential between ground region and high voltage region, it is not possible to transfer power between the ground region and the high voltage region through a wire. By providing a wireless power transfer between the ground region and the high voltage region, it is possible to avoid the risk for flashover and accordingly to avoid short circuit during the power transfer. Thus, providing the power transfer arrangement with a power transfer device using a wireless power transmission principle makes it possible to transfer power from ground potential to high electrical potential.

The first and second actuators are integrated in one single unit. Suitably, the first and second actuators are enclosed by a common housing. By integrating two interrupter units in the same unit only one power arrangement for wireless power transmission to the operating mechanism is needed. Furthermore, the same support frame can be used for supporting both interrupter units.

According to an embodiment of the invention, the operating mechanism and the first and second interrupter units are integrated to form the single unit. Thus, the single unit includes the operating mechanism as well as the first and second interrupter units. The operating mechanism is integrated with the interrupter units to form one single unit. Thus, the interrupter units including the operating mechanism could be shipped as a complete unit from the factory and accordingly allow easier, faster and simpler on-site installation and lower transport costs with associated environmental impact reductions.

According to an embodiment of the invention, the operating mechanism comprises a first transmission element mechanically connected between the first actuator and the movable contact of the first interrupter unit, and a second transmission element mechanically connected between the second actuator and the movable contact of the second interrupter unit.

According to an embodiment of the invention, the first transmission element is adapted for transmission of rotational movements from the first actuator to linear movements of the movable contact of the first interrupter unit, and the second transmission element is adapted for transmission of rotational movements from the second actuator to linear movements of the movable contact of the second interrupter unit.

According to an embodiment of the invention, the first and second interrupter units are elongated and are extending on opposite sides of the operating mechanism. This embodiment will provide a compact design of the circuit breaker.

According to an embodiment of the invention, the first and second interrupter units are extending horizontally on opposite sides of the operating mechanism. The circuit breaker will then have a T-shaped design. In an alternative embodiment, the circuit breaker may have a Y-shaped design.

According to an embodiment of the invention, the circuit breaker comprises a common support structure arranged to support the first and second interrupter units and the operating mechanism. Due to the fact that the first and second interrupter units and the operating mechanism are supported by a common support structure, the material needed for the support structures is significantly reduced and consequently also the costs. The support structure, such as support frames, can be shared between two poles of the circuit breaker. Thus it is possible to significantly reduce the footprint of the circuit breaker and the amount of support structure needed. For example, one support frame can be used to support two independently controlled interrupters. It is even possible to suspend the interrupter units and the operating mechanism in an existing busbar structure to reduce the amount of foundation needed.

According to an embodiment of the invention, the power transfer device is configured to receive and transmit power by means of inductive coupling. In inductive coupling, also called inductive power transfer, power is transferred between coils by a magnetic field. Inductive coupling is suitable for wireless power transfer.

According to an embodiment of the invention, the power transfer device comprises at least one power transmitter coil configured to wirelessly transmit power and at least one power receiver coil configured to wirelessly receive power from the power transmitter coil.

According to an embodiment of the invention, the circuit breaker comprises a support frame, for supporting the interrupter unit, including a base part arranged in the ground region and an insulating part extending between the base part and the high voltage region. The operating mechanism is located at an upper end of the insulating part in the high voltage region.

According to an embodiment of the invention, the insulating part is hollow and the power transfer device is located inside the hollow insulating part. The insulating part will provide a protective enclosure for the power transfer device. Further, arranging the power transfer device inside the insulating part will provide a more compact design of the circuit breaker.

According to an embodiment of the invention, the hollow insulating part is filled with an insulating gas. The insulating gas reduces the gap needed between the receiver and transmitter coils. Suitably, the insulating gas is SF6. If the hollow insulating part is filled with SF6 the gap needed between the receiver and transmitter coils can be significantly reduced, increasing the efficiency of the power transfer.

The invention is also related to the use of the high voltage circuit breaker according to the invention for interrupting a multi-phase current, wherein the first interrupter unit is configured to interrupt a first phase of the current and the second interrupter unit is configured to interrupt a second phase of the current. A multi-phase current has two or more phases.

### Brief description of the drawings

The invention will now be explained more closely by the description of different embodiments of the invention and with reference to the appended figures.
- Fig. 1: shows an example of a prior art circuit breaker.
- Fig. 2: shows a circuit breaker according to a first embodiment of the invention.
- Fig. 3: shows an example of an equivalent circuit of a wireless power transfer device, here in a series-parallel compensation configuration.
- Fig. 4: shows a circuit breaker according to a second embodiment of the invention.

### Detailed description of preferred embodiments of the invention

In the various figures, the same and corresponding functional parts are designated by the same reference numerals.

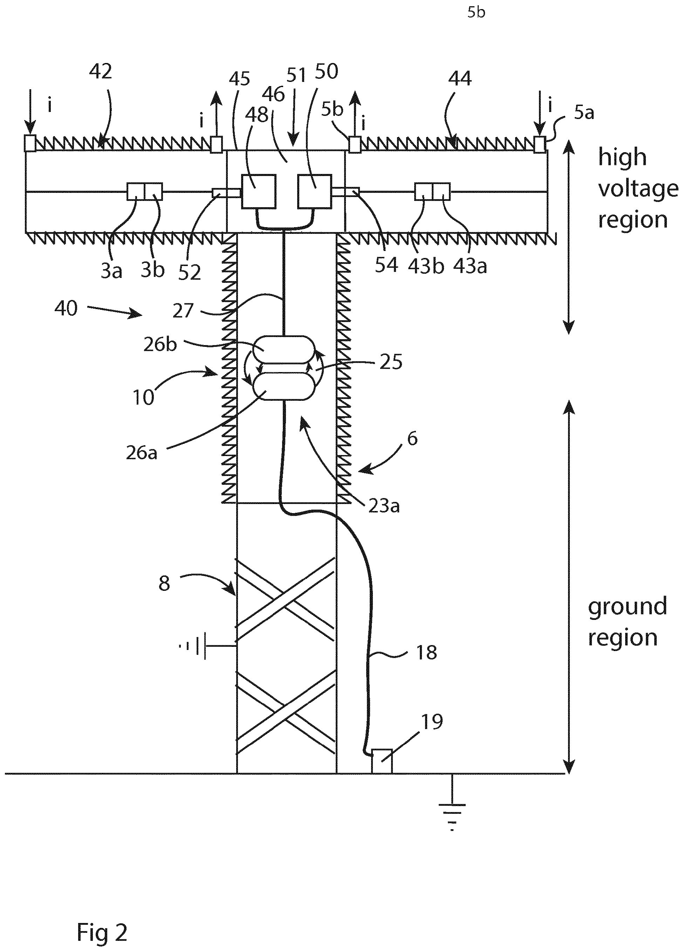

Figure 2 shows an example of a circuit breaker 40 according to an embodiment of the invention. The circuit breaker is extending upward in a vertical direction from a ground region to a high voltage region. Components of the circuit breaker located in the ground region have earth potential, and components of the circuit breaker located in the high voltage region have high electrical potential. The high voltage region is located above and at a distance from ground region and has an electrical potential above 1 kV. The circuit breaker40 comprises two interrupter units 42, 44. The interrupter units 42, 44 are arranged in the high voltage region. Each of the interrupter units 42, 44 has two contacts 3a-b, 43a-b movable in relation to each other in order to open and close the contacts. One of the contacts is a fixed contact and the other contact is a movable contact arranged movable in relation to the fixed contact between an opened and closed state. Each of the interrupter units 42, 44 comprises a fixed contact 3a, 43a and a movable contact 3b, 43b arranged movable in relation to the fixed contact between an opened and closed state. Each of the interrupter units 42, 44 further comprises an insulating housing enclosing the contacts, an electrical input terminal 5a arranged in one end of the interrupter unit 42, 44 and an electrical output terminal 5b in the opposite end of the interrupter unit 42, 44.

The circuit breaker 40 comprises an operating mechanism 46 arranged to move the movable contacts 3b, 43b between the opened and closed states. The operating mechanism 46 is located in the high voltage region, and accordingly at the same voltage level as the interrupter units 42, 44. The operating mechanism 46 is arranged to move the movable contacts 3b, 43b between the opened and closed state independently of each other. This means that it is possible to move one of the contacts without moving the other contact at the same time. The operating mechanism 46 is disposed between the interrupter units 42 and 44. The first and second actuators 48, 50 are integrated in one single unit 51 disposed between the first and second interrupter units 42, 44. The interrupter units 42, 44 are elongated and are extending on opposite sides of the operating mechanism 46. In this example, the interrupter units 42, 44 are extending horizontally on opposite sides of the operating mechanism 46. However, in another embodiment, the interrupter units 42, 44 may extend slightly upwards so that they form a V. Preferably, the first and second interrupter units 42, 44 are attached to the single unit 51.

The operating mechanism 46 comprises a first actuator 48, e.g. a motor, for moving the movable contact 3b of the first interrupter unit 42, and a second actuator 50, e.g. a motor, for moving the movable contact 43b of the second interrupter unit 44. The operating mechanism 46 is arranged to operate the movable contacts.

The power arrangement is configured to supply the first and second actuators 48, 50 with power. The operating mechanism 46 comprises a first transmission element 52 mechanically connected to the movable contact 3b and a second transmission element 54 mechanically connected to the movable contact 43b. The first transmission element 52 is arranged for transmission of rotational movements from the first actuator 48 to linear movements of the movable contact 3b. The second transmission element 54 is arranged for transmission of rotational movements from the second actuator 50 to linear movements of the movable contact 43b. The first transmission element 52 is mechanically connected between the first actuator 48 and the movable contact 3b of the first interrupter unit 42, and the second transmission element 54 is mechanically connected between the second actuator 50 and the movable contact 43b of the second interrupter unit 44. The first and second actuators 48, 50 are enclosed by a common housing 45. Thus, the first and second actuators are integrated in one unit.

By interfacing the two interrupter units 42, 44 with a standard T-mechanism housing and bringing power to the high voltage region with wireless power transfer to drive two separate actuators, e.g. motors drives, or linear actuators, it is possible to significantly reduce footprint of the circuit breaker. Linear actuators are based on simpler structures than motors (coil-magnet or coil-coil repulsion/attraction) and their linear displacement allows to focus in the direction of the interruption. The circuit breaker 40 further comprises a support structure in the form of a support frame 6 for supporting the interrupter units 42 and 44, as well as the operating mechanism 46 and keeping them at a safe distance from the ground. The support frame 6 includes a base part 8 arranged in the ground region, i.e. the base part 8 is electrically connected to ground potential. The support frame 6 further includes a hollow insulating part 10, also called a support insulator, extending between the base part 8 and the interrupter units 42, 44. The insulating part is filled with an insulating medium, for example, SF6. The insulating part 10 provides electrical insulation between the base part 8 at ground level and the interrupter units in the high voltage region. The operating mechanism 46 is located above the insulating part 10 and on the same voltage level as the interrupter unit. In this embodiment, the operating mechanism 46 is attached to the interrupter units 42 and 44.

A power supply source 19 is located in the ground region for supplying power to the operating mechanism 46. The power supply source 19 is, for example, a battery, or a power converter generating power preferably up to 1KW (or more) in the frequency range of 10-100 kHz. The initial power can come from DC or from a 50 Hz power network, different from the one over the breaker. If it is the same power network, the power supply source will be unreliable, for example, at the moment of actuation of the interruption.

The circuit breaker 40 further comprises a power transfer arrangement 23a for power transmission from the power supply source 19 to the operating mechanism 46. The power transfer arrangement is configured to supply the actuators 48, 50 with power. The power transfer arrangement 23a comprises a power transfer device 25 configured to wirelessly supply power to the operating mechanism 46. Power can be transferred wirelessly by a number of different power transmission technologies that use time-varying electric, magnetic, or electromagnetic fields. In an embodiment of the invention, the transmitter can be an ultrasound emitter and the receivercan be a piezoelectric receiver. In wireless power transfer, a wireless transmitter connected to the power supply source conveys the field energy across an intervening space to a receiver, where it is converted back to an electrical current and then used.

A wireless power transfer device, for example as shown in figure 2, is proposed as a way to transfer electric power from a power supply source in the ground region to the high voltage region where the actuator of the circuit breaker will be located. The power transfer device 25 comprises at least one power transmitter configured to wirelessly transmit power and at least one power receiver configured to wirelessly receive power from the power transmitter. This system is located inside the hollow insulating part 10 where the mechanical rod was located before, which was the prior art way to transmit the actuation from ground to where it was needed at high electrical potential. Preferably, the horizontal dimension of the power transfer device 25 is about 20% smaller than the diameter of the space inside the hollow insulating part to resolve electrical stresses. The described embodiment instead transfers electrical energy to the upper high voltage region where it can then be converted to mechanical actuation or saved, for example, in an energy storage, for further use related to the driving operations of the circuit breaker. In addition, the transferred energy can be used for other necessary actions, e.g. control, diagnostics, and communication at the high voltage level.

In this embodiment, the power transfer arrangement 23a comprises the wireless power transfer device 25, a cable 18 connected between the power supply source 19 and the power transfer device 25, and a cable 27 connected between the power transfer device 25 and the operating mechanism 46. The cable 27 is connected between the power transfer device 25 and the actuators 48, 50. In this embodiment, the power transfer device 25 comprises a power transmitter coil 26a configured to wirelessly transmit power and a power receiver coil 26b configured to wirelessly receive power from the power transmitter coil 26a. The power transmitter coil 26a and the power receiver coil 26b are configured to receive and transmit power by means of inductive coupling. The design of the power receiver coil 26b and the power transmitter coil 26a may make suitable use of a soft magnetic material. The power receiver coil 26b may also include a plurality of capacitors. A magnetic field is generated between the power receiver coil 26b and the power transmitter coil 26a during the power transmission.

The high voltage region is extended via cable 27 to the power receiver coil 26b of the power transfer device 25. In the same way, the ground region is extended via cable 18 to the power transmitter coil 26a. Thus, the power transfer device 25 is adapted for wireless power transmission between the ground region and the high voltage region. There is a gap between the power transmitter coil 26a and the power receiver coil 26b. The size of the gap is directly related to the voltage at the high voltage region. The distance that the power is wirelessly transmitted is the same as the gap between the coils. The size of the gap depends on the voltage in the high voltage region, the insulating medium surrounding the coils 26a-b, and the pressure in the insulating part 10. For example, if the insulating medium is SF6 and the voltage in the high voltage region is about 145kV, the gap between the coils 26a-b is about 50 mm. For smaller voltages, such as 1 kV, smaller gaps are possible in SF6. Suitably, the gap is about 1/3 of the horizontal diameters of the coils 26a-b. In this example, the inner diameter of the hollow insulating part is about 180 mm and the diameters of the coils 26a-b are about 150 mm.

In one embodiment, each of the power receiver coil 26b and the power transmitter coil 26a comprises a coil wound in solenoidal way around a concentrator made of soft magnetic material with high relative permeability (µr > 1000). This material can be assembled by Si-Fe laminates, e.g. 6.5% Si, which is preferable for relatively low frequencies up to 10 kHz. Alternatively, solid Mn-Zn ferrite (for frequencies moderately high) or Ni-Zn ferrite (for frequencies > 1 MHz) can be chosen. A wide range of frequencies is possible. Yet, a commonly used frequency range in various other areas (inductive cooking, electric vehicles battery charging) is 20-100 kHz, therefore cost-effective components are possible. For this specific frequency the material Mn-Zn is preferable.

The shape of the magnetic concentrator is such that no sharp edges are present; this is to avoid electric discharges between the coils. Analogously, enough clearance is needed between the coils and the support insulation inner wall. As a specific example, for an insulator with internal diameter of 180 mm, the separation between transmitter and receiver coils is 50 mm while the length of the core is 150 mm. High voltage evaluation, specifically 145 kV, of this geometry gives a breakdown voltage just of that of the air. For voltages higher than 145 kV, the geometrical parameters are scaled following the same reasoning. Yet, inside the hollow insulating part 10 the environment is SF6 which has a breakdown voltage one order of magnitude higher than that of air under the same conditions (pressure, temperature and humidity). Thus the parameters of the power transfer device 25 withstand the electrical stresses inside the insulating part 10.

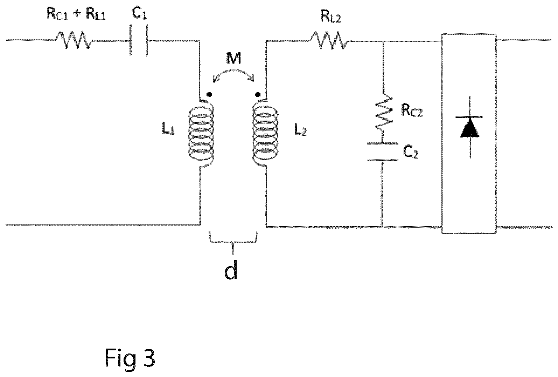

Figure 3 shows an equivalent circuit of a wireless power transfer device in a series / parallel compensation configuration. The power supply source 19 provides a standard 50 Hz line voltage, which goes through an AC/AC converter (not shown) to a desired wave shape, e.g. 20 kHz. It is also possible to have a DC power supply source and DC/AC conversion. The left side of the circuit shown in figure 3 receives power from the converter of the power supply source 19. The right side of the circuit shown in figure 3 is connected to the operating mechanism 46 at high electrical potential. In this figure, the coils 26a-b are represented by L1 and L2. Capacitors C1 and C2 are each one a set of parallel connected capacitors, together with the power transmitter and receiver coils L1 and L2 and the ferrite concentrators form a resonant LC circuit with a mutual inductance M. There is a gap d between the power receiver coil L1 and the power transmitter coil L2. In this example, the gap d is about 50 mm. The circuitry connections have to also be softly shaped to avoid any additional electrical stress. In figure 2 the instantaneous magnetic field direction is shown. The magnetic flux optimally travels inside the first ferrite core that couples to the next inductor making the flux to travel via the second ferrite core. This generates an induced voltage on the terminals of the secondary coil. The corresponding power is still at high frequency, and it is more useful if it is converted to DC by rectification as indicated in figure 3. In this way it can be used for energy storage or directly.

In this embodiment, the insulating part 10 is hollow and the power transfer device 25 is located inside the hollow insulating part 10. For example, the insulating part 10 is tubular. In an alternative embodiment, the power transfer device 25 can be located partly or wholly outside the insulating part 10. The hollow insulating part 10, whose height in the prior art is about 1460 mm, is taken by convenience to transfer power wirelessly and to convey SF6 gas to the next stage. In the prior art its function also was to contain the pull rod. In a circuit breaker according to the invention, it is possible to decrease the height of the hollow insulating part 10, for example to 1000 mm, and the system will still hold the transfer operation.

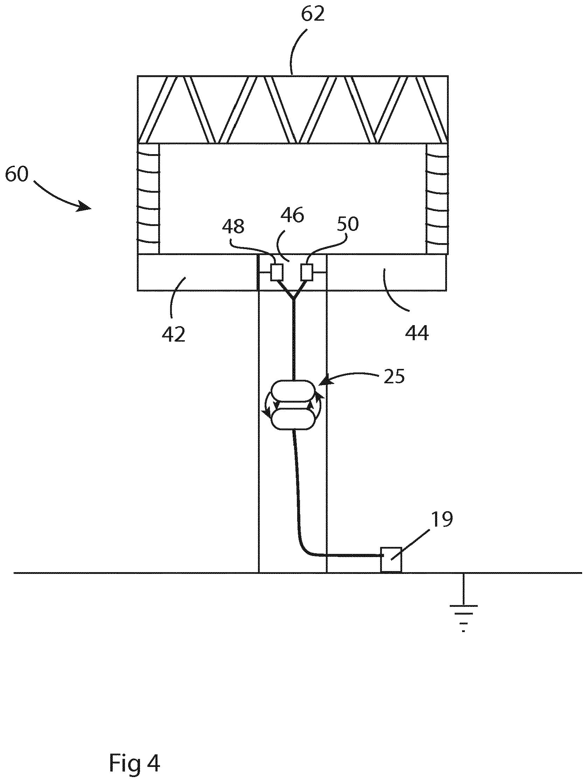

Figure 4 shows a hanging circuit breaker 60 having double interrupter units 42, 44 according to a third embodiment of the invention. The circuit breaker is suspended below a common support structure 62, for instance a busbar supporting structure, supporting the interrupters 42, 44 and the operating mechanism 46. In this embodiment, the interrupter units 42, 44 and the operating mechanism 46 is hanging or suspended below the support structure 62, for example of a substation, to reduce the amount of foundation needed. This means that the support frame 6 including the base part 8 and the insulating part 10 can be omitted, and thus a more compact and cost-effective circuit breaker can be achieved. The operating mechanism 46 is arranged in the high voltage region, i.e. at the same voltage level as the interrupter units 42, 44. The power supply source 19 is arranged in the ground region and the power transfer arrangement comprises a wireless power transfer device 25 configured to wirelessly supply power to the operating mechanism 46 in the high voltage region.

The present invention is not limited to the embodiments disclosed but may be varied and modified within the scope of the following claims. For example, the number of coils in the power transfer device can be more than two. Further, other wireless power transfer technologies can be used, for example, using a laser emitter and a photo cell as receptor, or using an ultrasound generator as transmitter and a piezoelectric as receptor.

## Claims

1. A high voltage circuit breaker (40; 60) comprising:
- first and second interrupter units (42, 44) located in a high voltage region, each interrupter unit including a movable contact (3b; 43b) arranged movable between an opened and closed state,
- an operating mechanism (46) located in the high voltage region and arranged to move the movable contacts (3b; 43b) between the opened and closed states, wherein the operating mechanism comprises a first actuator (48) arranged to operate the movable contact (3b) of the first interrupter unit (42), and a second actuator (50) arranged to operate the movable contact (43b) of the second interrupter unit (44),
- a power supply source (19) located in a ground region, and
- a power transfer arrangement (23a), for transferring power from the power supply source (19) to the operating mechanism (46), comprising a wireless power transfer device (25) adapted for wireless power transmission between the ground region and the high voltage region, and said power transfer device (25) is configured to supply the first and second actuators with power,
**characterized by** the first and second actuators (48, 50) being integrated in a single unit (51) disposed between the first and second interrupter units, and said first and second actuators (48, 50) being configured to move the movable contacts of the first and second interrupter units (42, 44) independently of each other.

2. The high voltage circuit breaker according to claim 1, wherein the operating mechanism (46) comprises a first transmission element (52) mechanically connected between the first actuator (48) and the movable contact (3b) of the first interrupter unit (42), and a second transmission element (54) mechanically connected between the second actuator (50) and the movable contact (43b) of the second interrupter unit (44).

3. The high voltage circuit breaker according to claim 2, wherein the first transmission element (52) is adapted for transmission of rotational movements from the first actuator (48) to linear movements of the movable contact (3b) of the first interrupter unit (42), and the second transmission element (54) is adapted for transmission of rotational movements from the second actuator (50) to linear movements of the movable contact (43b) of the second interrupter unit (44).

4. The high voltage circuit breaker according to any of the previous claims, wherein the first and second interrupter units (42, 44) are elongated and are extending on opposite sides of the operating mechanism (46).

5. The high voltage circuit breaker according to any of the previous claims, wherein the first and second actuators (48, 50) are enclosed by a common housing (45).

6. The high voltage circuit breaker according to any of the previous claims, wherein the operating mechanism (46) and the first and second interrupter units (42, 44) are integrated to form said single unit (51).

7. The high voltage circuit breaker according to any of the previous claims, wherein the circuit breaker comprises a common support structure (6; 62) arranged to support the first and second interrupter units (42, 44) and the operating mechanism (46).

8. The high voltage circuit breaker according to claim 7, wherein said common support structure (6) comprises a base part (8) arranged in the ground region and a hollow insulating part (10) extending between the base part and the interrupter units (42, 44), and said power transfer device (25) is located inside the hollow insulating part.

9. The high voltage circuit breaker according to claim 8, wherein the hollow insulating part (10) is filled with an insulating gas.

10. The high voltage circuit breaker according to any of the previous claims, wherein said power transfer device (25) is configured to transmit and receive power by means of inductive coupling.

11. The high voltage circuit breaker according to any of the previous claims, wherein said power transfer device (25) comprises at least one power transmitter coil (26a) configured to wirelessly transmit power and at least one power receiver coil (26b) configured to wirelessly receive power from the power transmitter coil.

12. The high voltage circuit breaker according to any of the previous claims, wherein the voltage at the high voltage region is more than 1 kV.

13. Use of the high voltage circuit breaker according to any of the claims 1 -12, for interrupting a multi-phase current, wherein the first interrupter unit (42) is configured to interrupt a first phase of the current and the second interrupter unit (44) is configured to interrupt a second phase of the current.

## Patentansprüche

1. Hochspannungsschutzschalter (40; 60), umfassend:
- eine erste und eine zweite Unterbrechereinheit (42, 44), die in einem Hochspannungsgebiet angebracht ist, wobei jede Unterbrechereinheit einen beweglichen Kontakt (3b; 43b) aufweist, der so ausgelegt ist, dass er zwischen einem geöffneten und einem geschlossenen Zustand bewegbar ist,
- einen Betriebsmechanismus (46), der in dem Hochspannungsgebiet angebracht ist und ausgelegt ist zum Bewegen des beweglichen Kontakts (3b; 43b) zwischen dem geöffneten und dem geschlossenen Zustand, wobei der Betriebsmechanismus ein erstes Stellglied (48) umfasst, das ausgelegt ist zum Betreiben des beweglichen Kontakts (3b) der ersten Unterbrechereinheit (42), und ein zweites Stellglied (50) umfasst, das ausgelegt ist zum Betreiben des beweglichen Kontakts (43b) der zweiten Unterbrechereinheit (44),
- eine Stromversorgungsquelle (19), die in einem Bodengebiet angebracht ist, und
- eine Stromübertragungsanordnung (23a) zum Übertragen eines Stroms von der Stromversorgungsquelle (19) zu dem Betriebsmechanismus (46), die eine drahtlose Stromübertragungsvorrichtung (25) umfasst, die geeignet ist für eine drahtlose Stromübertragung zwischen dem Bodengebiet und dem Hochspannungsgebiet, und wobei die Stromübertragungsvorrichtung (25) konfiguriert ist zum Versorgen des ersten und des zweiten Stellglieds mit Strom,
**dadurch gekennzeichnet, dass** das erste und das zweite Stellglied (48, 50) in eine einzige Einheit (51) integriert sind, die zwischen der ersten und der zweiten Unterbrechereinheit angebracht ist, und wobei das erste und das zweite Stellglied (48, 50) konfiguriert sind, um die beweglichen Kontakte der ersten und der zweiten Unterbrechereinheit (42, 44) unabhängig voneinander zu bewegen.

2. Hochspannungsschutzschalter nach Anspruch 1, wobei der Betriebsmechanismus (46) umfasst: ein erstes Übertragungselement (52), das mechanisch zwischen das erste Stellglied (48) und den beweglichen Kontakt (3b) der ersten Unterbrechereinheit (42) eingebunden ist; und ein zweites Übertragungselement (54), das mechanisch zwischen das zweite Stellglied (50) und den beweglichen Kontakt (43b) der zweiten Unterbrechereinheit (44) eingebunden ist.

3. Hochspannungsschutzschalter nach Anspruch 2, wobei das erste Übertragungselement (52) geeignet ist zum Übertragen von Drehbewegungen des ersten Stellglieds (48) in lineare Bewegungen des beweglichen Kontakts (3b) der ersten Unterbrechereinheit (42), und wobei das zweite Übertragungselement (54) geeignet ist zum Übertragen von Drehbewegungen des zweiten Stellglieds (50) in lineare Bewegungen des beweglichen Kontakts (43b) der zweiten Unterbrechereinheit (44).

4. Hochspannungsschutzschalter nach einem der vorhergehenden Ansprüche, wobei die erste und die zweite Unterbrechereinheit (42, 44) lang gestreckt sind und sich auf entgegengesetzten Seiten des Betriebsmechanismus (46) erstrecken.

5. Hochspannungsschutzschalter nach einem der vorhergehenden Ansprüche, wobei das erste und das zweite Stellglied (48, 50) in einem gemeinsamen Gehäuse (45) untergebracht sind.

6. Hochspannungsschutzschalter nach einem der vorhergehenden Ansprüche, wobei der Betriebsmechanismus (46) und die erste und die zweite Unterbrechereinheit (42, 44) integriert sind, um die einzige Einheit (51) zu bilden.

7. Hochspannungsschutzschalter nach einem der vorhergehenden Ansprüche, wobei der Schutzschalter eine gemeinsame Trägerstruktur (6; 62) umfasst, die ausgelegt ist zum Tragen der ersten und der zweiten Unterbrechereinheit (42, 44) und des Betriebsmechanismus (46) .

8. Hochspannungsschutzschalter nach Anspruch 7, wobei die gemeinsame Trägerstruktur (6) einen Basisabschnitt (8), der in dem Bodengebiet angeordnet ist, und einen hohlen Isolierabschnitt (10) umfasst, der sich zwischen dem Basisabschnitt und den Unterbrechereinheiten (42, 44) erstreckt, und wobei die Stromübertragungsvorrichtung (25) innerhalb des hohlen Isolierabschnitts angebracht ist.

9. Hochspannungsschutzschalter nach Anspruch 8, wobei der hohle Isolierabschnitt (10) mit einem Isoliergas gefüllt ist.

10. Hochspannungsschutzschalter nach einem der vorhergehenden Ansprüche, wobei die Stromübertragungsvorrichtung (25) konfiguriert ist zum Übertragen und Empfangen eines Stroms mithilfe einer induktiven Kopplung.

11. Hochspannungsschutzschalter nach einem der vorhergehenden Ansprüche, wobei die Stromübertragungsvorrichtung (25) mindestens eine Stromsendespule (26a), die konfiguriert ist zum drahtlosen Übertragen eines Stroms, und mindestens eine Stromempfangsspule (26b) umfasst, die konfiguriert ist zum drahtlosen Empfangen eines Stroms von der Stromsendespule.

12. Hochspannungsschutzschalter nach einem der vorhergehenden Ansprüche, wobei die Spannung in dem Hochspannungsgebiet größer als 1 kV ist.

13. Verwendung des Hochspannungsschutzschalters nach einem der Ansprüche 1 bis 12 zum Unterbrechen eines Mehrphasenstroms, wobei die erste Unterbrechereinheit (42) konfiguriert ist zum Unterbrechen einer ersten Phase des Stroms und wobei die zweite Unterbrechereinheit (44) konfiguriert ist zum Unterbrechen einer zweiten Phase des Stroms.

## Revendications

1. Disjoncteur à haute tension (40 ; 60) comprenant :
- des première et seconde unités d'interrupteur (42, 44) situées dans une zone à haute tension, chaque unité d'interrupteur comprenant un contact mobile (3b ; 43b) agencé mobile entre un état ouvert et un état fermé,
- un mécanisme de commande (46) situé dans la zone à haute tension et agencé pour déplacer les contacts mobiles (3b ; 43b) entre l'état ouvert et l'état fermé, le mécanisme de commande comprenant un premier actionneur (48) agencé pour actionner le contact mobile (3b) de la première unité d'interrupteur (42), et un second actionneur (50) agencé pour actionner le contact mobile (43b) de la seconde unité d'interrupteur (44),
- une source d'alimentation électrique (19) située dans une zone de masse, et
- un dispositif de transfert de puissance (23a), pour transférer de la puissance depuis la source d'alimentation électrique (19) jusqu'au mécanisme de commande (46), comprenant un dispositif de transfert de puissance sans fil (25) adapté pour la transmission de puissance sans fil entre la zone de masse et la zone à haute tension, et ledit dispositif de transfert de puissance (25) étant configuré pour alimenter en puissance les premier et second actionneurs,
**caractérisé en ce que** les premier et second actionneurs (48, 50) sont intégrés dans une seule unité (51) disposée entre les première et seconde unités d'interrupteur, et lesdits premier et second actionneurs (48, 50) sont configurés pour déplacer les contacts mobiles des première et seconde unités d'interrupteur (42, 44) indépendamment l'un de l'autre.

2. Disjoncteur à haute tension selon la revendication 1, le mécanisme de commande (46) comprenant un premier élément de transmission (52) connecté mécaniquement entre le premier actionneur (48) et le contact mobile (3b) de la première unité d'interrupteur (42), et un second élément de transmission (54) connecté mécaniquement entre le second actionneur (50) et le contact mobile (43b) de la seconde unité d'interrupteur (44).

3. Disjoncteur à haute tension selon la revendication 2, le premier élément de transmission (52) étant adapté pour la transmission de mouvements de rotation du premier actionneur (48) à des mouvements linéaires du contact mobile (3b) de la première unité d'interrupteur (42), et le second élément de transmission (54) étant adapté pour la transmission de mouvements de rotation du second actionneur (50) à des mouvements linéaires du contact mobile (43b) de la seconde unité d'interrupteur (44).

4. Disjoncteur à haute tension selon l'une quelconque des revendications précédentes, les première et seconde unités d'interrupteur (42, 44) étant allongées et s'étendant sur des côtés opposés du mécanisme de commande (46).

5. Disjoncteur à haute tension selon l'une quelconque des revendications précédentes, les premier et second actionneurs (48, 50) étant enfermés dans un boîtier commun (45).

6. Disjoncteur à haute tension selon l'une quelconque des revendications précédentes, le mécanisme de commande (46) et les première et seconde unités d'interrupteur (42, 44) étant intégrés pour former ladite seule unité (51).

7. Disjoncteur à haute tension selon l'une quelconque des revendications précédentes, le disjoncteur comprenant une structure de support commune (6 ; 62) agencée pour supporter les première et seconde unités d'interrupteur (42, 44) et le mécanisme de commande (46) .

8. Disjoncteur à haute tension selon la revendication 7, ladite structure de support commune (6) comprenant une partie de base (8) agencée dans la zone de masse et une partie isolante creuse (10) s'étendant entre la partie de base et les unités d'interrupteur (42, 44), et ledit dispositif de transfert de puissance (25) étant situé à l'intérieur de la partie isolante creuse.

9. Disjoncteur à haute tension selon la revendication 8, la partie isolante creuse (10) étant remplie d'un gaz isolant.

10. Disjoncteur à haute tension selon l'une quelconque des revendications précédentes, ledit dispositif de transfert de puissance (25) étant configuré pour transmettre et recevoir de la puissance au moyen d'un couplage inductif.

11. Disjoncteur à haute tension selon l'une quelconque des revendications précédentes, ledit dispositif de transfert de puissance (25) comprenant au moins une bobine émettrice de puissance (26a) configurée pour transmettre de la puissance sans fil et au moins une bobine réceptrice de puissance (26b) configurée pour recevoir de la puissance sans fil provenant de la bobine émettrice de puissance.

12. Disjoncteur à haute tension selon l'une quelconque des revendications précédentes, la tension dans la zone à haute tension étant supérieure à 1 kV.

13. Utilisation du disjoncteur à haute tension selon l'une quelconque des revendications 1 à 12, pour interrompre un courant multiphase, la première unité d'interrupteur (42) étant configurée pour interrompre une première phase du courant et la seconde unité d'interrupteur (44) étant configurée pour interrompre une seconde phase du courant.
